# EUROPEAN PATENT SPECIFICATION

(11) **EP 1 760 430 B1**
(45) Date of publication and mention of the grant of the patent: **23.09.2015**
(21) Application number: 05022747.9
(22) Date of filing: 19.10.2005
(51) Int. Cl.: G01C 21/00, G06F 17/30, G01C 15/00, G01C 11/30

(54) **Geographic data collecting system**
System zur Erfassung von geographischen Daten
Système de saisie de données géographiques

(30) Priority: 11.07.2005 JP 2005202047
(43) Date of publication of application: 07.03.2007
(73) Proprietor: Kabushiki Kaisha TOPCON, Tokyo-to (JP)
(72) Inventor: Otani, Hitoshi, Itabashi-ku, Tokyo-to (JP); Inaba, Hiroshi, Itabashi-ku, Tokyo-to (JP); Ishida, Takeshi, Itabashi-ku, Tokyo-to (JP); Tanahashi, Atsushi, Itabashi-ku, Tokyo-to (JP); Kaneko, Junki, Itabashi-ku, Tokyo-to (JP)
(74) Representative: Louis Pöhlau Lohrentz

(56) References cited:
- EP-A- 1 219 925
- US-A- 4 717 251
- US-A- 5 671 451

## Description

### BACKGROUND OF THE INVENTION

The present invention relates to a geographic data collecting system using GPS (global positioning system). In particular, the present invention relates to a geographic data collecting system for collecting image data associated with coordinate data as geographic data.

In recent years, a navigation system using an electronic map has been propagated. The navigation system is provided on vehicles or provided on handy phones (cellular phones) as additional function and is used.

With the propagation of the navigator system, geographic data required for the electronic map has also been increasingly diversified, and there are strong demands on more precise and more minute geographic data and on symbol marks, 3-dimensional images, etc., which should be added to the map to facilitate visual checking.

For example, in order to collect geographic data to be transferred to an electronic map, operators must visit an operation site and must acquire specific geographic information at the site, e.g., positions of public buildings, telephone poles, or positions of public telephones. Further, if there is a building or the like to serve as a mark, an image of the building should be taken by an image pickup device such as a camera, and the image should be acquired as image data.

To transfer the data to the map, coordinate data on the ground surface is required. For the purpose of acquiring positions of buildings or telephone poles and positions of public telephones, measurement on an object is performed conventionally by a surveying instrument.

In the past, as a measuring system for acquiring an image and for conveniently measuring a position of an object, a system described in the Japanese Patent Publication JP-A-2004-317237 has been known.

The measuring system described in JP-A-2004-317237 comprises a global positioning system (GPS) and can continuously perform measurement on topography and objects on the ground surface without using reference points. The measuring system comprises an image pickup device and performs matching of an image taken with a result of surveying, and coordinate data with the image can be acquired.

By the measuring system as described above, measurement data and image data can be acquired with high accuracy. For geographic data to be transferred to the electronic map, very high accuracy for the map is not required. To acquire geographic data by the measuring system, the measuring system is moved sequentially and is installed at a position as necessary. However, for the acquisition of geographic data, many processes are required such as measurement of a distance to an object to be measured, measurement of a vertical angle, measurement of a horizontal angle, taking of an image, matching of the image with the measurement data, etc. This is not suitable for the case where many geographic data must be acquired within short time.

A portable type distance measuring system is described in JP-A-2002-39748 as a distance measuring system for convenient measurement of distance. This portable type distance measuring system does not comprise an image pickup device, and an image cannot be acquired. For the purpose of acquiring geographic data to be transferred to a map, an image must be acquired separately, and complicated procedure is required such as matching of the image with measurement data.

US-A-5 671 451 describes a geographic data collecting system comprising an image pickup unit for taking a digital image of an object, a GPS unit, an azimuth sensor for detecting an image pickup direction, a display unit for displaying the image, a receiving unit for receiving GPS correction information, and a control arithmetic unit for obtaining corrected position data based on the correction information, for associating the image with the corrected position data and for storing the image and the corrected position data in a storage unit.

### SUMMARY OF THE INVENTION

It is an object of the present invention to provide a geographic data collecting system, by which it is possible to conveniently measure an object to be measured and to acquire an image.

To attain the above object, the present invention provides a geographic data collecting system, which comprises an image pickup unit for taking a digital image including a measuring point of an object to be measured, a GPS unit, an azimuth sensor for detecting an image pickup direction, a display unit for displaying the image taken, a receiving unit for receiving correction information to correct measurement result of the GPS unit, and a control arithmetic unit for obtaining corrected position data by correcting the measurement result based on the correction information and for associating the image acquired by the image pickup unit with the corrected position data and for storing the image and the corrected position data in a storage unit. Also, the present invention provides the geographic data collecting system as described above, wherein the control arithmetic unit obtains 3-dimensional coordinates of the object to be measured based on two images obtained by taking images of the object to be measured from two image pickup points, based on two position information obtained for the two image pickup points, and based on azimuth angles of two image pickup directions detected by the azimuth sensor. Further, the present invention provides the geographic data collecting system as described above, wherein geographic data including at least a point of the object to be measured is provided in advance, and a position of the object to be measured is associated with the geographic data based on 3-dimensional coordinate data of the object to be measured thus calculated. Also, the present invention provides the geographic data collecting system as described above, wherein an image of the object to be measured as displayed on the display unit is associated with 3-dimensional coordinate data of the object to be measured, and the data is converted to a distance or an area by designating a position on the image. Further, the present invention provides the geographic data collecting system as described above, wherein there is provided a sensor for integrally obtaining a moving direction and a moving distance, and selection of a second point to take the image of the object to be measured from a first point for taking the image is suggested. Also, the present invention provides the geographic data collecting system as described above, wherein there is provided a gyro sensor, and the gyro sensor detects a moving direction when the gyro sensor is moved from a first image pickup point to a second image pickup point. Further, the present invention provides the geographic data collecting system as described above, wherein coordinates of the measuring point on the object to be measured are associated with the image taken and are stored. Also, the present invention provides the geographic data collecting system as described above, wherein a template including pixels of a predetermined range is set up on a first image, a retrieval range wider than the range of the template is set up on a second image, and an image is taken so that the template is included within the retrieval range in the second image. Further, the present invention provides the geographic data collecting system as described above, wherein the control arithmetic unit performs feature extraction in a predetermined range on the first image and sets up pass points based on the feature extraction, measures the pass points from the matching with the second image, and calculates relative orientation. Also, the present invention provides the geographic data collecting system as described above, wherein 3-dimensional coordinates of a point is obtained when the point is designated on the image based on position information of a first image pickup point and a second image pickup point by the GPS unit and based on angle information of the point on the image according to the first image pickup point and the second image pickup point, and the 3-dimensional coordinates are associated with geographic data including the point, and the position of the point can be displayed on the display unit as the image. Further, the present invention provides the geographic data collecting system as described above, wherein a geographic data collecting system, comprising an image pickup unit for taking a digital image including an object to be measured, a GPS unit, an azimuth sensor for detecting an image pickup direction, a display unit for displaying the image taken, wherein 3-dimensioinal coordinates of the object to be measured are obtained from two images acquired from two points, and there is provided position measuring function through an image in addition to position measuring function by the GPS unit.

According to the present invention, a geographic data collecting system comprises an image pickup unit for taking a digital image including a measuring point of an object to be measured, a GPS unit, an azimuth sensor for detecting an image pickup direction, a display unit for displaying the image taken, a receiving unit for receiving correction information to correct measurement result of the GPS unit, and a control arithmetic unit for obtaining corrected position data by correcting the measurement result based on the correction information and for associating the image acquired by the image pickup unit with the corrected position data and for storing the image and the corrected position data in a storage unit. Thus, azimuth angle data and position data necessary for the image data and geographic data of the object to be measured can be conveniently acquired.

Also, according to the present invention, in the geographic data collecting system as described above, the control arithmetic unit obtains 3-dimensional coordinates of the object to be measured based on two images obtained by taking images of the object to be measured from two image pickup points, based on two position information obtained for the two image pickup points, and based on azimuth angles of two image pickup directions detected by the azimuth sensor. As a result, a coordinate position of the object to be measured can be obtained.

Further, according to the present invention, in the geographic data collecting system as described above, there is provided a sensor for integrally obtaining a moving direction and a moving distance, and selection of a second point to take the image of the object to be measured from a first point for taking the image is suggested, and also there is provided a gyro sensor, and the gyro sensor detects moving direction when the gyro sensor is moved from a first image pickup point to a second image pickup point. This provides convenient guideline when the operator moves from the first image pickup point to the second image pickup point, and this contributes to the improvement of working efficiency.

### BRIEF DESCRIPTION OF THE DRAWINGS

Fig. 1 is a schematical block diagram of an embodiment of the present invention;
Fig. 2 is a perspective view to show a condition to take an image of an object to be measured by a geographic data collecting system according to the present embodiment;
Fig. 3 (A) and Fig. 3 (B) each represents a drawing to show an image acquired by the geographic data collecting system; and
Fig. 4 is a flow chart to explain operation of the embodiment of the present invention.

### DETAILED DESCRIPTION OF THE PREFERRED EMBODIMENT

Description will be given below on the best mode for carrying out the present invention referring to the drawings.

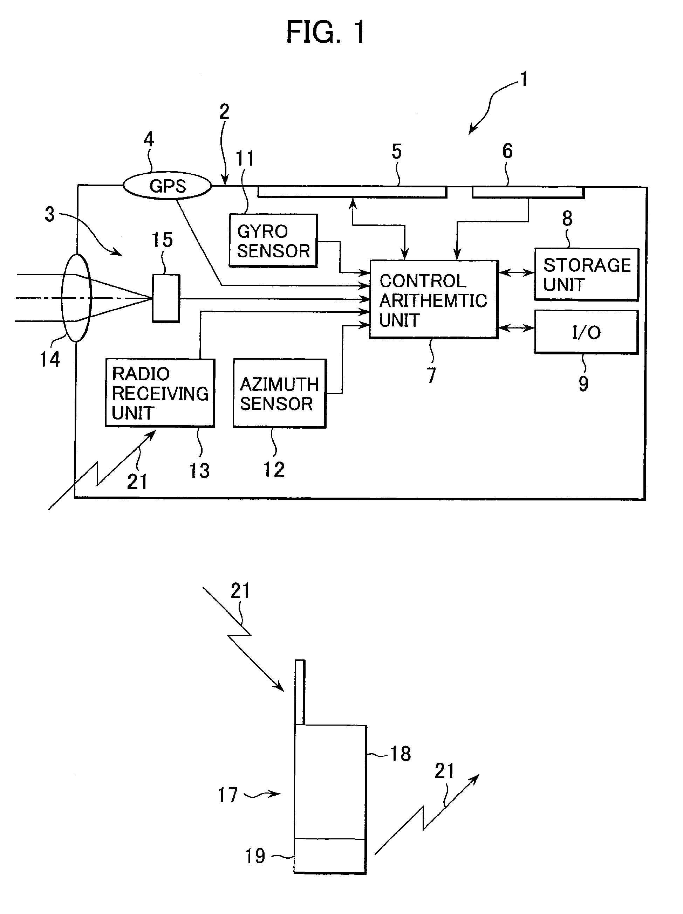

Referring to Fig. 1, description will be given on a geographic data collecting system 1 according to the present invention.

In the figure, reference numeral 2 denotes a portable housing. In the housing 2, there are provided an image pickup unit 3, a GPS unit 4, a display unit 5, and an operation unit 6. Inside the housing 2, there are provided a control arithmetic unit 7, a storage unit 8, an input/output control unit 9, a gyro sensor 11, an azimuth sensor 12, and a radio receiving unit 13. The image pickup unit 3 comprises an objective lens 14, and an image pickup element 15 comprising an assembly of a multiple of pixels such as a CCD, a CMOS sensor, etc. The image pickup element 15 can specify address of each individual pixel (position in the image pickup element). An image of an object formed in the image pickup element 15 is outputted to the control arithmetic unit 7 as a digital image signal from the image pickup element 15, and the image is stored in the storage unit 8 via the control arithmetic unit 7.

The display unit 5 displays the image thus picked up and also serves as a touch panel, and an operator can perform processing as necessary by the display unit 5. The operation unit 6 is provided with operation buttons as necessary (not shown), such as a power on/off button to turn a power source on or off, a shutter button to perform image pickup operation, and a display switchover button to switch over a screen, etc., so that processing as necessary can be carried out.

The storage unit 8 has a storage medium (not shown), and data can be written or read via the control arithmetic unit 7. In the storage medium, various types of programs for operating the geographic data collecting system 1 are stored, such as a sequence program for performing measurement, an image processing program for processing the image taken, a measurement correcting program for correcting measurement data measured by GPS based on an correction information (to be described later), a program for displaying data and the image on the display unit 5, etc. The storage medium may comprise an internal storage medium fixedly incorporated in the geographic data collecting system 1, such as a semiconductor memory, a HD, and a portable storage medium removably adapted to the storage unit 8. As the portable storage medium, a compact size storage medium, etc. represented by a memory card is used, which can be accommodated in the geographic data collecting system 1. As an auxiliary storage unit, etc. such as an external storage unit which is an external HD unit which is connectable to the geographic data collecting system 1 may be used.

The input/output control unit 9 can be connected to an external processing unit, e.g. a personal computer (PC). The input/output control unit 9 can output the data stored in the storage unit 8 to the personal computer, and the data can also be inputted from the personal computer. The various types of programs as described above can be written or rewritten. Also, via the input/output control unit 9, geographic data including at least the data of a geographical point of an object to be measured is stored in the storage unit 8.

The gyro sensor 11 detects a moving direction when the geographic data collecting system 1 is moved during data collecting operation and inputs the data to the control arithmetic unit 7. The control arithmetic unit 7 displays the moving direction on the display unit 5. An acceleration sensor may be used instead of the gyro sensor. The acceleration sensor can determine approximate distance integrally with the direction.

The azimuth sensor 12 detects a direction of an optical axis of the objective lens 14, i.e. an image pickup direction of the image pickup unit 3. A result of the detection is inputted to the control arithmetic unit 7.

The radio receiving unit 13 receives a correction information for GPS measurement to be transmitted from a correction information transmitter/receiver 17 (to be described later), and the correction information is outputted to the control arithmetic unit 7.

Generally speaking, in the position measurement based on the GPS unit alone, there are causes to induce errors due to propagation delay in the ionosphere or in the atmosphere, and the measurement accuracy is in the range of about 10 m - 50 m. For this reason, a differential GPS (D-GPS) or a real-time kinetic GPS (RTK-GPS) with higher measurement accuracy is used. In the D-GPS, measurement accuracy can be improved to the range of several tens of cm to several meters by correction information using electric waves of FM broadcasting issued from a standard station with its position known or using a medium wave beacon. In the RTK-GPS, signals received and acquired at a fixed point used as the standard and at a moving point are transferred to the moving point via a radio system or the like, and the position is determined at the moving point. As a result, the measurement accuracy is improved to the range of about 1 - 2 cm. In a virtual reference system GPS (VRS-GPS), a condition as if a reference point is near the site of surveying is created from observation data at a plurality of electronic reference points, and surveying with high accuracy can be carried out by using a single RTK-GPS receiver. The system according to the present invention is a compact size integrated type measuring system of handy type. When strict accuracy is not required, it is preferable to use the D-GPS system, for instance, as described above, which is easier to use.

The correction information transmitter/receiver 17 comprises a correction information receiver 18 and a correction information transmitter 19. A correction information 21 can be received by a handy phone, and the handy phone can be conveniently used as the correction information receiver 18. Also, the correction information 21 received by the correction information receiver 18 may be transmitted to the radio receiving unit 13 by utilizing the transmitting function of the handy phone. Or, the correction information transmitter 19 may be installed as shown in the figure, and the correction information 21 may be transmitted to the radio receiving unit 13 by the correction information transmitter 19. Some types of handy phones have Bluetooth function, and Bluetooth radio system suitable for large capacity transmission for near distance may be used for transmitting the correction information 21.

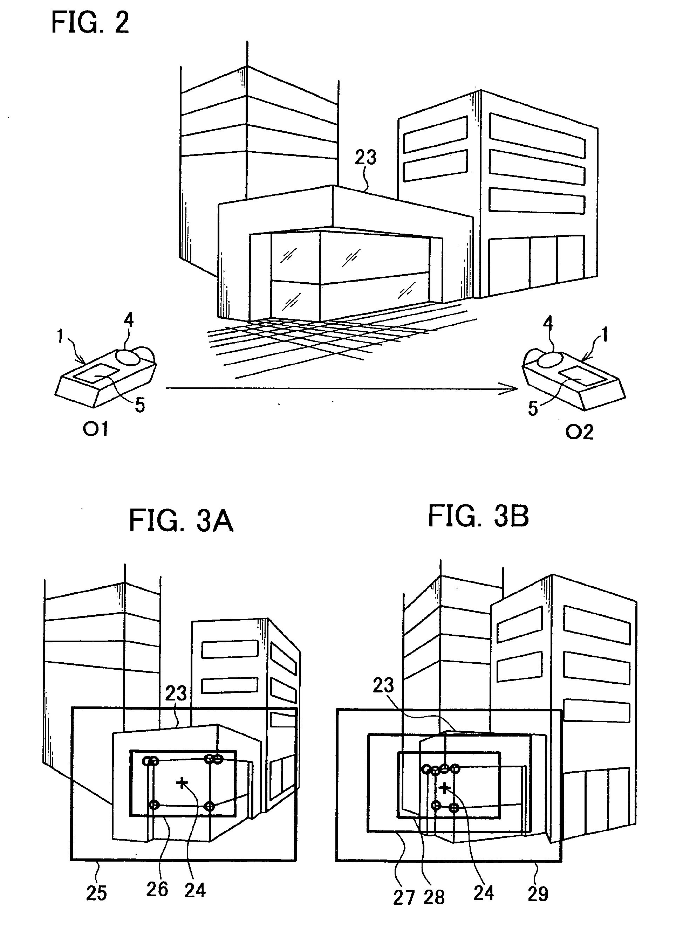

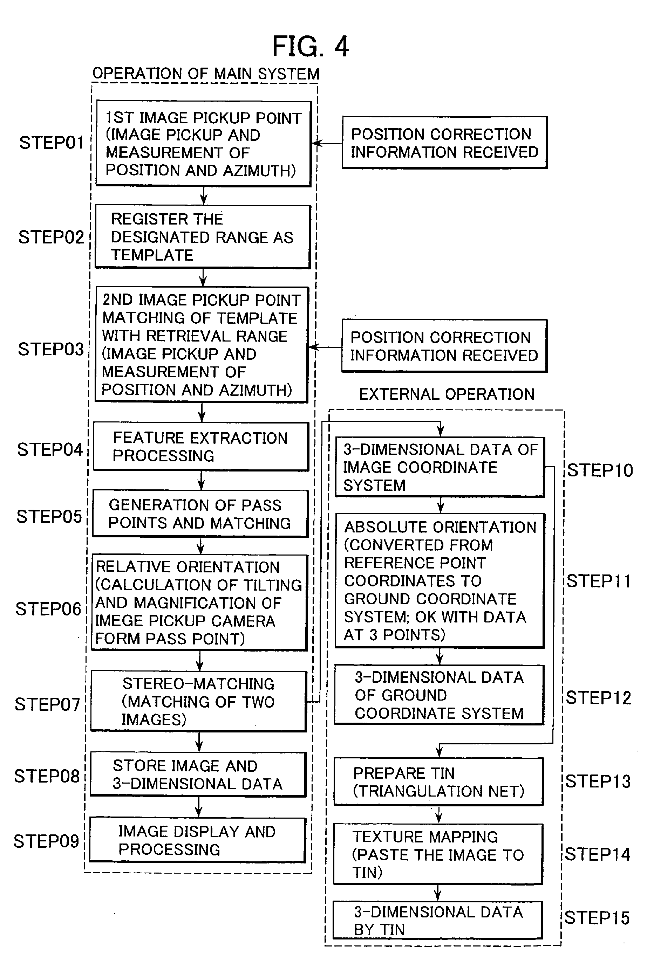

Referring to Fig. 2 to Fig. 4, description will be given on operation of the geographic data collecting.

[Step 01] From a first image pickup point 01, an image of an object to be measured 23 is taken. When the image pickup unit 3 is directed toward the object to be measured 23, an image including the object to be measured 23 and its surroundings is displayed on the display unit 5. A certain position on the object to be measured 23 is determined as a measuring point 24. It is preferable that the measuring point 24 is selected on a point such as a nameplate attached on a wall surface, a corner of a window, etc., which can be easily identified. A direction of the image pickup unit 3 is determined in such manner that the measuring point 24 is positioned at the center of the image (see Fig. 3). Then, by operating a button on the operation unit 6, a first image 25 of the object to be measured 23 at the first image pickup point O1 is taken. The first image 25 is stored in the storage unit 8.

At the same time as acquisition of the image, coordinates of the first image pickup point O1 are measured (position measurement (X1, Y2, Z3)). In the coordinate measurement, a first position data is acquired by the GPS unit 4. Then, the correction information 21 is received by the correction information transmitter/receiver 17. The correction information 21 is transmitted to the radio receiving unit 13 from the correction information transmitter 19. The control arithmetic unit 7 corrects the first position data according to the measurement correcting program and the correction information 21, and a first corrected position data is acquired.

By the azimuth sensor 12, a first azimuth angle with respect to the measuring point 24 from the first image pickup point O1 is approximately detected, and the first azimuth angle thus detected is stored in the storage unit 8.

The first corrected position data and the first azimuth angle are associated with the first image 25 and are recorded in the storage unit 8. The association of the first corrected position data and the first azimuth angle with the first image 25 is carried out in such manner that, for instance, the association is carried out according to the association data, e.g. association data is prepared by storing the first corrected position data, the first azimuth angle and the first image 25.

[Step 02] On the display unit 5, which also serves as a touch panel, a predetermined range including the measuring point 24 (preferably, a range with the center at the measuring point 24; a rectangular area in Fig. 3) (a x a) is registered as a first template 26.

[Step 03] Then, moving to a second image pickup point 02, an image of the object to be measured 23 is taken from a different direction. During the process to move from the first image pickup point O1 to the second image pickup point 02, the change of the azimuth angle is detected by the gyro sensor 11. Approximate data of the moving angle with respect to the first image pickup point O1 and the measuring point 24 are measured at real time (with the measuring point 24 at the center). The moving angle is displayed on the display unit 5 so that the operator can become aware of how far it has been moved with respect to the first image pickup point O1 and the measuring point 24.

It is preferable that the second image pickup point 02 is positioned at a predetermined angle or more with respect to the first image pickup point O1 and the measuring point 24. Therefore, the operator can select the second image pickup point 02 adequately according to the moving angle displayed on the display unit 5.

At the second image pickup point 02, the image pickup unit 3 is directed toward the object to be measured 23 so that the measuring point 24 comes to the center of an image. A retrieval range 27 (b x b; b > a) is set up on the image under image-taking. Under the condition that a range to correspond to the first template 26 including the measuring point 24 (a second template 28) is to be included in the retrieval range 27, a second image 29 of the object to be measured 23 at the second image pickup point 02 is taken. The second image 29 is stored in the storage unit 8 as a stereo image with respect to the first image 25.

Measurement by the GPS unit 4 and correction by the correction information 21 are performed. Similarly to the case at the first image pickup point O1, accurate 3-dimensional second corrected position data on the second image pickup point 02 is acquired, and a second azimuth angle at the second image pickup point 02 with respect to the measuring point 24 is detected by the azimuth sensor 12. The second azimuth angle and the second corrected position data are associated with the second image 29 and are stored in the storage unit 8.

[Step 04] Features of the first image 25 and the second image 29 are extracted. A range of processing (c x c; c > b) where feature extraction is performed may be the entire image or the central portion of the image including the first template 26 and the second template 28. Size of the range of processing is determined adequately by taking factors such as processing time, etc. into account. Features are extracted by edge processing using LG filter, SUZAN filter, etc.

[Step 05] The features thus extracted are primarily intersections and single points, and these are set up as pass points.

[Step 06] Based on the pass points thus set up, magnifications of the first image 25 and the second image 29 taken at the first image pickup point O1 and the second image pickup point 02 respectively and tiltings of the image pickup unit 3 are calculated, and relative orientation is performed.

[Step 07] Based on the magnifications at the image pickup points and the tiltings of the image pickup unit 3 thus calculated, the magnifications and the tiltings between the first image 25 and the second image 29 are corrected (deviation correction). Based on the first image 25 and the second image 29 thus deviation correction is performed and on the pass points, stereo-matching is performed.

[Step 08] The images processed by stereo-matching are associated with the position data of the object to be measured 23 and are stored in the storage unit 8.

The position coordinates of the first image pickup point O1, the second image pickup point 02 and the object to be measured 23 are associated with each other by stereo-matching as image pickup points and an image pickup object. In this case, the azimuth data contributes to approximate identification as to which direction the the image pickup unit 3 was directed. Image taking is performed from two directions at two arbitrary positions, and images are acquired. Thus, geographic data of 3-dimensional images associated at the position of the object to be measured can be easily acquired. Further, the object to be measured is selected as appropriate, and geographic data of 3-dimensional image, with which the position of the object to be measured is associated, is sequentially stored in the storage unit 8.

[Step 09] The 3-dimensional image thus obtained is displayed on the display unit 5 though the operation by the operator. Geographic data is sent to the personal computer via the portable storage medium. Or, the geographic data collecting system 1 is connected with the personal computer, and the data is transmitted from the geographic data collecting system 1 to the personal computer. The geographic data is transferred to an electronic map book by the personal computer. In case the electronic map is stored in advance in the storage unit 8, geographic data may be transferred to the electronic map at the geographic data collecting system 1. The electronic map, to which geographic data has been transferred, may be displayed on the display unit 5.

Further, from the images and the position data obtained by the geographic data collecting system 1, image data with 3-dimensional data can be obtained where each pixel in the image has 3-dimensional position data of a ground coordinate system. When the image with 3-dimensional data is displayed on the display unit 5 and an arbitrary position on the image is designated, it is possible to obtain 3-dimensional data at the designated position. Specifically, in addition to 3-dimensional measurement of the first image pickup point O1 and the second image pickup point 02 measured by the GPS unit and to 3-dimensional measurement of the measuring point 24 based on the results of the measurement at the image pickup points O1 and 02, it is possible to perform 3-dimensional measurement at an arbitrary point on the image.

[Step 10] Stereo image data and azimuth data obtained in Step 07 are sent to the personal computer via the portable storage medium or by communication means as necessary. By performing stereo-matching of the first image 25 and the second image 29, it is possible to obtain 3-dimensional data of an image coordinate system based on an optical axis of one of the images.

[Step 11] Next, by adding the measured values of the GPS unit 4, the corrected position data obtained based on the position correction information, and also azimuth data obtained at the azimuth sensor 12 to the image coordinate system, the data is converted to the data of the ground coordinate system.

[Step 12] Each pixel in the image has position data of the ground coordinate system. By indicating an arbitrary point in the image, 3-dimensional data of the ground coordinate system can be promptly acquired. By designating a position or a range on the displayed image on the display unit 5, it is possible to obtain a distance or an area.

In the 3-dimensional data measurement based on the stereo image, positional relation of each individual points which make up the image of the object to be measured can be obtained. A coordinate system using an optical axis of one of the first image and the second image as reference is formed (image coordinate system). Based on the image coordinate system, 3-dimensional display can be given on a 2-dimensional display or the like. Because the coordinate system can be easily converted, the coordinate system can be converted to a ground coordinate system which is used in surveying operation, for instance.

Based on the 3-dimensional data of the image coordinate system (Step 10), TIN (triangulation net) may be prepared, and 3-dimensional data by TIN may be acquired through processing such as texture mapping, etc. (Step 13 - Step 15).

## Claims

1. A geographic data collecting system, comprising an image pickup unit for taking a digital image including a measuring point of an object to be measured, a GPS unit, an azimuth sensor for detecting an image pickup direction, a display unit for displaying the image taken, a receiving unit for receiving correction information to correct measurement result of said GPS unit, and a control arithmetic unit for obtaining corrected position data by correcting the measurement result based on the correction information and for associating the image acquired by said image pickup unit with the corrected position data and for storing the image and the corrected position data in a storage unit
**charcterized in that**
the GPS unit is provided for acquiring position data in the coordinate measurement,
a moving detecting sensor is provided for integrally obtaining a moving direction and a moving distance,
the receiving unit is provided for receiving a correction information for GPS measurement to be transmitted from a correction information transmitter/receiver and the correction information is outputted to the control arithmetic unit,
the control arithmetic unit is provided for correcting the position data according to a measurement correcting program and
the correction information, and for acquiring corrected position data, wherein said control arithmetic unit is arranged for suggesting a selection of a second point to take the image of the object to be measured from a first point for taking the image based on a detection result by said moving detecting sensor, is arranged for obtaining 3-dimensional coordinates of the object to be measured based on the two images obtained by taking images of the object to be measured from the two image pickup points, based on two position information obtained for the two image pickup points, and based on azimuth angles of two image pickup directions detected by said azimuth sensor.

2. A geographic data collecting system according to claim 1, wherein geog raphic data including at least a point of the object to be measured is provided in advance, and a position of the object to be measured is associated with the geographic data based on 3-dimensional coordinate data of the object to be measured thus calculated.

3. A geographic data collecting system according to claim 1, wherein an image of the object to be measured as displayed on said display unit is associated with 3-dimensional coordinate data of the object to be measured, and the data is converted to a distance or an area by designating a position on the image.

4. A geographic data collecting system according to claim 1, wherein there is provided a gyro sensor, and said gyro sensor detects a moving direction when the gyro sensor is moved from a first image pickup point to a second image pickup point.

5. A geographic data collecting system according to claim 1, wherein coordinates of the measuring point on the object to be measured are associated with the image taken and are stored.

6. A geographic data collecting system according to claim 1, wherein a template including pixels of a predetermined range is set up on a first image, a retrieval range wider than the range of said template is set up on a second image, and an image is taken so that the template is included within the retrieval range in said second image.

7. A geographic data collecting system according to claim 1, wherein said control arithmetic unit performs feature extraction in a predetermined range on the first image and sets up pass points based on the feature extraction, measures the pass points from the matching with the second image, and calculates relative orientation.

8. A geographic data collecting system according to claim 7, wherein 3-dimensional coordinates of a point is obtained when the point is designated on the image based on position information of a first image pickup point and a second image pickup point by said GPS unit and based on angle information of the point on the image according to the first image pickup point and the second image pickup point, and the 3-dimensional coordinates are associated with geographic data including the point, and the position of the point can be displayed on said display unit as the image.

9. A geographic data collecting system according to claim 1, wherein 3-dimensional coordinates of the object to be measured are obtained from two images acquired from two points, and there is provided position measuring function through an image in addition to position measuring function by said GPS unit.

## Patentansprüche

1. Sammelsystem für geographische Daten, das eine Bildaufnahmeeinheit zum Aufnehmen eines digitalen Bildes, das einen Messpunkt eines Objekts, das zu messen ist, enthält, eine GPS-Einheit, einen Azimutsensor zum Detektieren einer Bildaufnahmerichtung, eine Anzeigeeinheit zum Anzeigen des aufgenommenen Bildes, eine Empfangseinheit zum Empfangen von Korrekturinformationen zum Korrigieren von Messergebnissen der GPS-Einheit und eine arithmetische Steuereinheit zum Erhalten von korrigierten Positionsdaten durch Korrigieren des Messergebnisses anhand der Korrekturinformationen und zum Zuordnen des Bildes, das durch die Bildaufnahmeeinheit erhalten worden ist, zu den korrigierten Positionsdaten und zum Speichern des Bildes und der korrigierten Positionsdaten in einer Speichereinheit, umfasst,
**dadurch gekennzeichnet, dass**
die GPS-Einheit zum Erhalten von Positionsdaten in der Koordinatenmessung vorgesehen ist,
ein Bewegungserfassungssensor zum einheitlichen Erhalten einer Bewegungsrichtung und einer Bewegungsentfernung vorgesehen ist,
die Empfangseinheit zum Empfangen von Korrekturinformationen vorgesehen ist, derart, dass GPS-Messungen von einem Korrekturinformationen-Sender/Empfänger übertragen werden und die Korrekturinformationen an die arithmetische Steuereinheit ausgegeben werden,
die arithmetische Steuereinheit zum Korrigieren der Positionsdaten gemäß einem Messungs-Korrekturprogramm und den Korrekturinformationen und zum Erhalten von korrigierten Positionsdaten vorgesehen ist, wobei die arithmetische Steuereinheit dazu ausgelegt ist, eine Auswahl eines zweiten Punktes vorzuschlagen, um das Bild des Objekts, das zu messen ist, von einem ersten Punkt zum Aufnehmen des Bildes anhand eines Detektionsergebnisses durch den Bewegungserfassungssensor aufzunehmen und 3-dimensionale Koordinaten des Objekts, das zu messen ist, anhand der zwei Bilder zu erhalten, die erhalten worden sind, indem Bilder des Objekts, das zu messen ist, von den zwei Bildaufnahmepunkten anhand von zwei Positionsinformationen, die für die zwei Bildaufnahmepunkte erhalten worden sind, und anhand von Azimutwinkeln der zwei Bildaufnahmerichtungen, die von dem Azimutsensor detektiert worden sind, aufgenommen werden.

2. Sammelsystem für geographische Daten nach Anspruch 1, wobei geographische Daten, die mindestens einen Punkt des Objekts, das zu messen ist, enthalten, im Voraus bereitgestellt werden, und eine Position des Objekts, das zu messen ist, den so berechneten geographischen Daten anhand von 3-dimensionalen Koordinatendaten des Objekts, das zu messen ist, zugeordnet wird.

3. Sammelsystem für geographische Daten nach Anspruch 1, wobei ein Bild des Objekts, das zu messen ist, so wie es auf der Anzeigeeinheit angezeigt wird, 3-dimensionalen Koordinatendaten des Objekts, das zu messen ist, zugeordnet wird, und die Daten in eine Entfernung oder eine Fläche umgewandelt werden, indem eine Position in dem Bild bestimmt wird.

4. Sammelsystem für geographische Daten nach Anspruch 1, wobei ein Gyrosensor vorgesehen ist und der Gyrosensor eine Bewegungsrichtung detektiert, wenn der Gyrosensor von einem ersten Bildaufnahmepunkt zu einem zweiten Bildaufnahmepunkt bewegt wird.

5. Sammelsystem für geographische Daten nach Anspruch 1, wobei Koordinaten des Messpunkts auf dem Objekt, das zu messen ist, dem aufgenommen Bild zugeordnet werden und gespeichert werden.

6. Sammelsystem für geographische Daten nach Anspruch 1, wobei eine Vorlage, die Pixel aus einem vorher bestimmten Bereich enthält, in einem ersten Bild erstellt wird, ein Wiedergewinnungsbereich, der breiter als der Bereich der Vorlage ist, in einem zweiten Bild erstellt wird, und ein Bild derart aufgenommen wird, dass die Vorlage innerhalb des Wiedergewinnungsbereichs in dem zweiten Bild enthalten ist.

7. Sammelsystem für geographische Daten nach Anspruch 1, wobei die arithmetische Steuereinheit in einem vorher bestimmten Bereich in dem ersten Bild eine Merkmalextraktion durchführt und Passpunkte anhand der Merkmalextraktion erstellt, die Passpunkte von dem Abgleich mit dem zweiten Bild misst und die relative Orientierung berechnet.

8. Sammelsystem für geographische Daten nach Anspruch 7, wobei 3-dimensionale Koordinaten eines Punktes erhalten werden, wenn der Punkt in dem Bild anhand von Positionsinformationen eines ersten Bildaufnahmepunktes und eines zweiten Bildaufnahmepunktes durch die GPS-Einheit und anhand von Winkelinformationen des Punktes in dem Bild gemäß dem ersten Bildaufnahmepunkt und dem zweiten Bildaufnahmepunkt bestimmt wird, und die 3-dimensionalen Koordinaten geographischen Daten, die den Punkt enthalten, zugeordnet werden und die Position des Punktes auf der Anzeigeeinheit als das Bild angezeigt werden kann.

9. Sammelsystem für geographische Daten nach Anspruch 1, wobei 3-dimensionale Koordinaten des Objekts, das zu messen ist, von zwei Bildern, die von zwei Punkten erlangt worden sind, erhalten werden und eine Positions-Messfunktion durch ein Bild zusätzlich zur Positions-Messfunktion durch die GPS-Einheit vorgesehen ist.

## Revendications

1. Système de collecte de données géographiques, comprenant une unité de capture d'image destinée à prendre une image numérique incluant un point de mesure d'un objet à mesurer, une unité GPS, un capteur d'azimut destiné à détecter une direction de capture d'image, une unité d'affichage destinée à afficher l'image prise, une unité de réception destinée à recevoir des informations de correction en vue de corriger un résultat de mesure de ladite unité GPS, et une unité arithmétique de commande destinée à obtenir des données de position corrigées en corrigeant le résultat de mesure sur la base des informations de correction, et à associer l'image acquise par ladite unité de capture d'image aux données de position corrigées, et à stocker l'image et les données de position corrigées dans une unité de stockage
**caractérisé en ce que** :
l'unité GPS est fournie en vue d'acquérir des données de position dans la mesure de coordonnées ;
un capteur de détection de déplacement est fourni en vue d'obtenir intégralement une direction de déplacement et une distance de déplacement ;
l'unité de réception est fournie en vue de recevoir des informations de correction pour une mesure GPS à transmettre à partir d'un émetteur-récepteur d'informations de correction et les informations de correction sont délivrées en sortie à l'unité arithmétique de commande ;
l'unité arithmétique de commande est fournie en vue de corriger les données de position selon un programme de correction de mesure et les informations de correction, et en vue d'acquérir des données de position corrigées, dans lequel ladite unité arithmétique de commande est agencée de manière à suggérer une sélection d'un second point pour prendre l'image de l'objet à mesurer à partir d'un premier point pour prendre l'image sur la base d'un résultat de détection par ledit capteur de détection de déplacement, et est agencée en vue d'obtenir des coordonnées tridimensionnelles de l'objet à mesurer sur la base des deux images obtenues en prenant des images de l'objet à mesurer à partir des deux points de capture d'image, sur la base de deux informations de position obtenues pour les deux points de capture d'image, et sur la base d'angles azimutaux de deux directions de capture d'image détectées par ledit capteur d'azimut.

2. Système de collecte de données géographiques selon la revendication 1, dans lequel des données géographiques incluant au moins un point de l'objet à mesurer sont fournies à l'avance, et une position de l'objet à mesurer est associée aux données géographiques sur la base de données de coordonnées tridimensionnelles de l'objet à mesurer ainsi calculées.

3. Système de collecte de données géographiques selon la revendication 1, dans lequel une image de l'objet à mesurer telle qu'affichée sur ladite unité d'affichage est associée à des données de coordonnées tridimensionnelles de l'objet à mesurer, et les données sont converties en une distance ou une surface en désignant une position sur l'image.

4. Système de collecte de données géographiques selon la revendication 1, dans lequel est fourni un capteur gyroscopique, et ledit capteur gyroscopique détecte une direction de déplacement lorsque le capteur gyroscopique est déplacé d'un premier point de capture d'image à un second point de capture d'image.

5. Système de collecte de données géographiques selon la revendication 1, dans lequel des coordonnées du point de mesure sur l'objet à mesurer sont associées à l'image prise et sont stockées.

6. Système de collecte de données géographiques selon la revendication 1, dans lequel un motif incluant des pixels d'une plage prédéterminée est défini sur une première image, une plage de récupération plus large que la plage dudit motif est définie sur une seconde image, et une image est prise de sorte que le motif est inclus au sein de la plage de récupération dans ladite seconde image.

7. Système de collecte de données géographiques selon la revendication 1, dans lequel ladite unité arithmétique de commande met en oeuvre une extraction de caractéristiques dans une plage prédéterminée sur la première image, et définit des points de passage sur la base de l'extraction de caractéristiques, mesure les points de passage à partir de la mise en correspondance avec la seconde image, et calcule une orientation relative.

8. Système de collecte de données géographiques selon la revendication 7, dans lequel des coordonnées tridimensionnelles d'un point sont obtenues lorsque le point est désigné sur l'image, sur la base d'informations de position d'un premier point de capture d'image et d'un second point de capture d'image, par ladite unité GPS, et sur la base d'informations d'angle du point sur l'image selon le premier point de capture d'image et le second point de capture d'image, et les coordonnées tridimensionnelles sont associées à des données géographiques incluant le point, et la position du point peut être affichée sur ladite unité d'affichage sous la forme de l'image.

9. Système de collecte de données géographiques selon la revendication 1, dans lequel des coordonnées tridimensionnelles de l'objet à mesurer sont obtenues à partir de deux images acquises à partir de deux points, et une fonction de mesure de position à travers une image est fournie, outre une fonction de mesure de position par ladite unité GPS.
